Europäisches Patentamt

European Patent Office

Office européen des brevets

(11) Publication number: **0 280 525**
**A2**

(12) **EUROPEAN PATENT APPLICATION**

(21) Application number: **88301577.8**

(22) Date of filing: **24.02.88**

(51) Int. Cl.⁴: **B 29 C 59/04**
**B 26 F 1/38**

(30) Priority: **24.02.87 US 17603   22.02.88 US 158622**

(43) Date of publication of application:
**31.08.88   Bulletin   88/35**

(84) Designated Contracting States:
**BE CH DE FR GB IT LI NL SE**

(71) Applicant: **Robbins, Edward S., III**
**459 N. Court Street**
**Florence Alabama 35630  (US)**

(72) Inventor: **Robbins, Edward S., III**
**459 N. Court Street**
**Florence Alabama 35630  (US)**

(74) Representative: **Raynor, John et al**
**W.H. Beck, Greener & Co 7 Stone Buildings Lincoln's Inn**
**London WC2A 3SZ  (GB)**

(54) **Method for the continuous in-line contour edge molding of extruded plastic products and pattern roll for practicing such method.**

(57) A method of forming a plastic product having contoured peripheral edges molded in a continuous in-line manner is described. A bounded recessed region is defined on at least a portion of a pattern roll's cylindrical surface. The pattern roll is then rotated in opposition to a platen roll so as to define a nip therebetween. Discrete volumetric portions of the recessed region are thus sequentially continuously presented at the nip upon rotation of the pattern roll. A molten thermoplastic is simultaneously extruded into the presented volumetric portions. Thus, this extrusion/rotation causes the thermoplastic material to fill the presented volumetric portions of the defined region, which filled portions will eventually form an outline of the plastic product and will, moreover, cause the thermoplastic material to be flowably compressed in the defined nip. This compression, in turn, allows the contoured edges to, in effect, be molded for each sequential volumetric presentation of the bounded region. Pattern rolls for practicing this method and a method of forming the same are also disclosed.

EP 0 280 525 A2

**Description**

# METHOD FOR THE CONTINUOUS IN-LINE CONTOUR EDGE MOLDING OF EXTRUDED PLASTIC PRODUCTS AND PATTERN ROLL FOR PRACTICING SUCH METHOD

## FIELD OF THE INVENTION

This invention relates to methods for forming in a continuous in-line manner, contoured edges on extruded plastic products. In a specific embodiment, the invention relates to the simultaneous extrusion and molding of contoured edges of a floor mat (e.g., mats which are sometimes referred to as "chair mats"). The invention also relates to apparatus and methods for forming a pattern on a roll and particularly to a silhouette for a roll used to form an outline pattern on plastic sheet material.

## BACKGROUND AND SUMMARY OF THE INVENTION

In the formation of many plastic articles, plastic sheet material is usually passed between die rolls, one or both of which may have a pattern negative for producing a pattern on the final sheet plastic product. Different processes and apparatus have been used to form the pattern on the roll. One such prior process (Leedy et al., U.S. Patent No. 3,256,376) includes forming a negative of the pattern from any workable material, such as wood, and from that negative, forming a positive of a plastic material. The resulting positive plate is electroplated to build up a copper surface. With an appropriate thickness of copper overlying the plastic plate, molten lead is poured in a form, cooled and machined to form a flat negative. This flat negative is then rolled to a given diameter with the pattern on the outside and plated on its surface as desired, for example, with chrome. The rolled plate is then suitably secured to a drum of the plastic molding equipment in condition ready for use. It will be appreciated that the metal mold pattern necessarily is distorted when flexed by rolling the flat lead negative to the required drum diameter and thus the pattern may not be accurately produced.

In another process (Hlinka, U.S. Patent No. 3,551,544), an outer cylinder or sleeve may be heated to expand so that it may then be slipped over a cylindrical roll. When cooled, the sleeve shrink-fits onto the roller. Spot welds are used to retain the sleeve on the roll. Thereafter, the sleeve is then bored to provide a pattern. (Col. 4, lines 19-29). In addition, grooves 86 can be formed by milling or the like. (Col. 4, lines 13-18). The cleat forming bores 90 are located so as to communicate with grooves 86. (Col. 4, lines 29-36).

According to one aspect of the present invention, there are provided novel and improved apparatus and methods for forming a pattern on a plastic forming roll wherein the pattern may be accurately formed and applied to the roll free of distortion whereby high pattern accuracy is achieved. Thus, in accordance with one aspect of the present invention, there is provided a roll having a groove in its surface which, when projected on a flat surface, has an outline of a pattern for at least part of the shaped article. A pattern (for, example, a silhouette) is formed from a cylindrical sleeve, the inner diameter of which is substantially the same as the diameter of the base of the groove. The sleeve, however, has a wall thickness greater than the depth of the groove. The pattern is cut from the cylindrical sleeve, and may be cut lengthwise to form pattern segments. These pattern segments are then applied in the groove(s) on the roll. Because the sleeve has a depth greater than the depth of the groove, a portion of the pattern projects above the surface of the roll for forming at least part of the shaped article.

Alternatively, the pattern need not be cut to form a plurality of pattern segments. Instead, the pattern may form a single pattern segment. This pattern segment is heated or otherwise expanded so it can be slipped onto the roll and fitted securely into the groove(s).

It will also be appreciated that the pattern may first be formed from one or more of cylindrical sleeves. Thus, each pattern segment may be disposed in the groove along the roll. In the case of a silhouette, opposite ends of the segments may abut the grooves to form a substantially continuous silhouette.

Because of the use of the groove(s) to align or hold the segment(s), the accuracy of the resulting pattern is enhanced. Thus, a distortion-free pattern may be obtained.

In another form of the present invention, the pattern is formed from one or more cylindrical sleeves which have an inside diameter corresponding to the diameter of the roll. Once formed into pattern segments, they are applied to the roll surface without bending and are suitably secured thereto, for example, by screws. Similarly, as indicated above, a pair of silhouettes may be provided in this manner and disposed along the roll directly on top of the roll surface and secured thereto to form a continuous silhouette.

Because the patterns are formed from cylindrical sleeves, they are not subject to bending or distortion upon application to the roll in this form of the invention. Consequently, the accuracy of the resulting contoured pattern is a function of the accuracy of its formation from the sleeves and this can be formed accurately by four or more axis machining centers. Thus, according to the present invention, a distortion-free contoured pattern on a roll may be formed.

As has been briefly mentioned, the typical formation of plastic products usually depends upon the use of previously formed sheet stock plastic material. While the use of previously formed sheet stock material is typically not objectionable when most plastic products are produced, there are some significant disadvantages in terms of increased production costs and aesthetics of the finished product when conventional product-forming techniques are employed to produce plastic products having contoured (e.g., beveled) edges.

According to another aspect of this invention, a method is provided whereby a plastic product (for example, a chair mat) having continuous contoured peripheral edges is formed. An interior region of a cylindrical surface portion on a pattern roll is bounded by means of a continuous "rib" which corresponds to the outline of the mat and also has surfaces corresponding to the desired contoured or beveled edge of the mat. Preferably, the pattern roll is of the type as described briefly above.

A nip is formed between the pattern roll and a platen roll. Upon relative rotation of the pattern roll in opposition to the platen roll, discrete volumetric portions of the bounded interior region will sequentially continuously be presented to the defined nip. Simultaneously with the rotation of the pattern roll, a molten thermoplastic material is extruded into the volumetric portions of the bounded interior region which are sequentially continuously being presented at the nip. This extrusion/rotation thus causes the molten thermoplastic material to fill the presented volumetric portions of the bounded region. As may be appreciated, when this technique is practiced on a continuous, in-line manner, the bounded region will eventually form an outline of the plastic product and will, moreover cause the thermoplastic to be flowably compressed in the defined nip. This compression, in turn, allows the contoured edges to, in effect, be molded for each sequential volumetric presentation of the bounded region. In other words, the method of the present invention employs thermoplastic extrusion techniques in combination with an in-line molding technique so as to form a plastic mat, for example, having the contoured edges.

A plastic product (e.g., a chair mat) is thereby produced with contoured or beveled edges without the need to first form a sheet of plastic stock and then subject the stock to after-treatments such as, cutting, edge forming and the like. That is, the method of the present invention produces contoured or beveled edges on a plastic product simultaneously with the formation of the product itself (or at least simultaneously with the formation of a product preform).

Accordingly, it is one object of this invention to provide novel and improved apparatus and methods for forming a pattern on a roll for forming patterns on sheet plastic material wherein the pattern is distortion-free and an accurate reproduction of the desired pattern is obtained. For example, chair mats having any desired configuration can be produced.

Another object of this invention is to employ the rolls of this invention (or other suitable pattern rolls) to produced contoured edges on plastic sheet products, whereby the plastic sheet products are formed by extrusion and the contoured edges are formed simultaneously with such extrusion in a continuous in-line manner.

Other advantages and aspects of this invention will become more clear after careful consideration is given to the detailed description of the preferred exemplary embodiments of the invention which follow.

## BRIEF DESCRIPTION OF THE DRAWINGS

Reference will hereinafter be made to the accompanying drawings wherein like reference numerals throughout the various FIGURES denote like structural elements, and wherein;

FIGURE 1 is a schematic perspective view of a chair mat having contoured edges produced in accordance with the present invention;

FIGURE 2 is a cross-sectional profile of a preferred contoured edge which may be produced by the present invention;

FIGURE 3 is a schematic diagram showing the various processing steps employed in the present invention;

FIGURE 4 is a top plan view of a web of mat preforms having contoured edges produced by the present invention;

FIGURE 5 is a cross-sectional elevational view of the mat preforms shown in FIGURE 4 and taken along line 4-4 therein;

FIGURE 6 is an elevational view of a preferred pattern roll arrangement employed in the method of this invention;

FIGURE 7 is a cross-sectional view of one possible rib profile which may be employed in the pattern roll shown in FIGURE 6;

FIGURE 8 is a cross-sectional view of another possible rib profile which may be employed in the pattern roll shown in FIGURE 6;

FIGURE 9 is an exploded perspective view illustrating a method for forming the pattern roll of the present invention;

FIGURE 10 is an enlarged cross-sectional view illustrating the pattern roll of FIGURE 9 in opposition to another roll;

FIGURE 11 is a view similar to FIGURE 9 illustrating another form of pattern roll according to the present invention; and

FIGURE 12 is an enlarged cross-sectional view illustrating the pattern applied to the roll according to the embodiment of the invention illustrated in FIGURE 11, with another roll in opposition thereto.

## DETAILED DESCRIPTION OF THE PREFERRED EXEMPLARY EMBODIMENTS

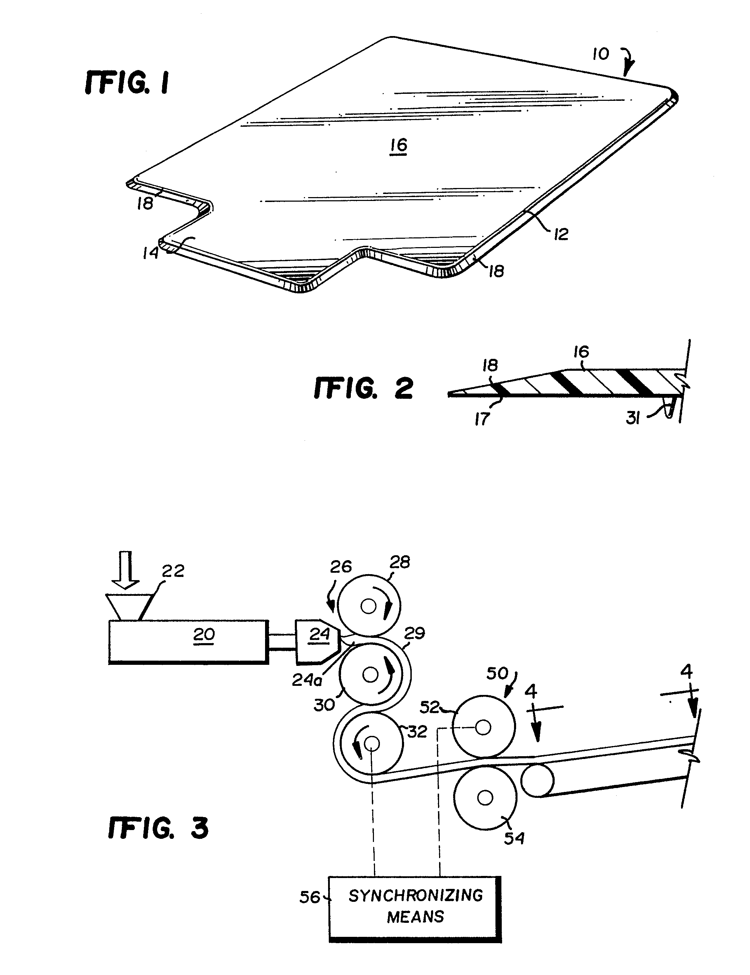

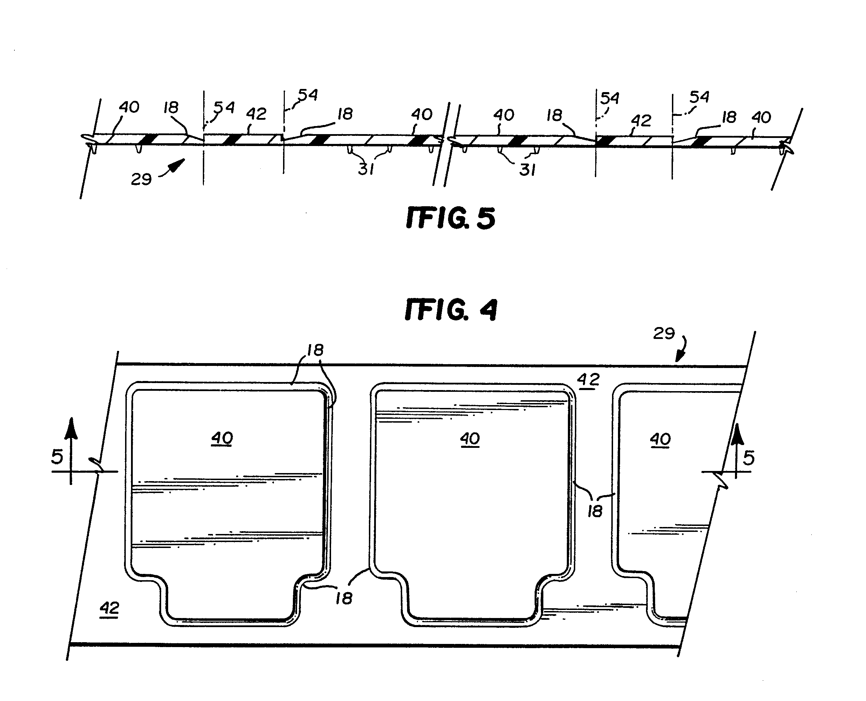

FIGURES 1 and 2 illustrate a representative plastic product which may be produced in accordance with the present invention. The product illustrated in FIGURES 1 and 2 is in the form of a chair mat 10 having a base 12 and a forward extension 14 for disposition in the well of a desk whereby a chair, not shown, mounted on rollers and disposed on the upper surface 16 of mat 10 may be readily and easily moved about the mat. The peripheral edges of the mat 10 are in the form of a taper which slope downwardly and outwardly from the top surface 16. The taper of edges 18 thus more easily facilitates smooth movement of the chair both onto and off the mat 10.

A schematic representation of the method in accordance with present invention is shown in accompanying FIGURES 3. As is seen, a suitable thermoplastic material (usually in the form of pellets) is added to the screw extruder 20 via hopper 22. As is well known, extruder 20 thoroughly fluxes and heats the thermoplastic so that it is in a molten form when transferred to the extrusion die 24. The molten thermoplastic is then extruded from a slit (not shown) formed in the die 24 so that the molten thermoplastic is forced into a nip 26 defined between pattern and platen rolls 28, 30, respectively.

As will be described in more detail hereinafter, pattern roll 28 establishes a recessed region defined by a continuous rib which form the outline of the mat 10. The rib also includes contoured surfaces which conform to the contoured edge 18 of the resulting mat 10. That is, the outline on the pattern roll 28, when projected onto a flat surface, will correspond to the peripheral edge 18 of mat 10.

The platen roll 29 may have a smooth or textured cylindrical surface, or it may be provided with cleat-forming recesses so as to concurrently form cleats 31 extending from the bottom surface 17 of the chair mat 10 (see FIGURE 2). These cleats 31, as is well known, provide a means for positionally retaining the chair mat 10 against a floor surface.

Since the thermoplastic material exiting die 24 (designated by reference number 24a) is in a molten state, it will flow laterally of the rolls under the compressive forces of the pattern and platen rolls 28, 30, at the nip 26. Thus, the established region of the pattern roll 28 will be filled with the molten thermoplastic 24a and will exit the nip 26 in the form of a sheet 29. The sheet 29 then passes around an idle roll 32 which may be supplied with a cooling medium (e.g., water) so as to solidify the sheet 29. The sheet 29 then passes onto further downstream processing such as removal of the mat 10 from waste regions of the sheet 29 via cutting assembly 50 (to be described below).

As is seen in FIGURE 4, a sequential number of mat "preforms" 40 is formed, each preform 40 being defined (i.e. bounded) by a tapered edge 18 yet connected to lateral waste regions 42 of sheet 29. These mat preforms 40 may then subsequently be removed thereby forming individual mats 10 by passing the sheet 29 into contact with a cutter roll assembly 50 (see FIGURE 3). Cutter roll assembly 50 may be comprised of a cutter roll 52 and a pressure roll 54 which is preferably coated with an elastomeric layer. Cutter roll 52 defines a cutting edge corresponding in shape and outline to the periphery of mat 10.

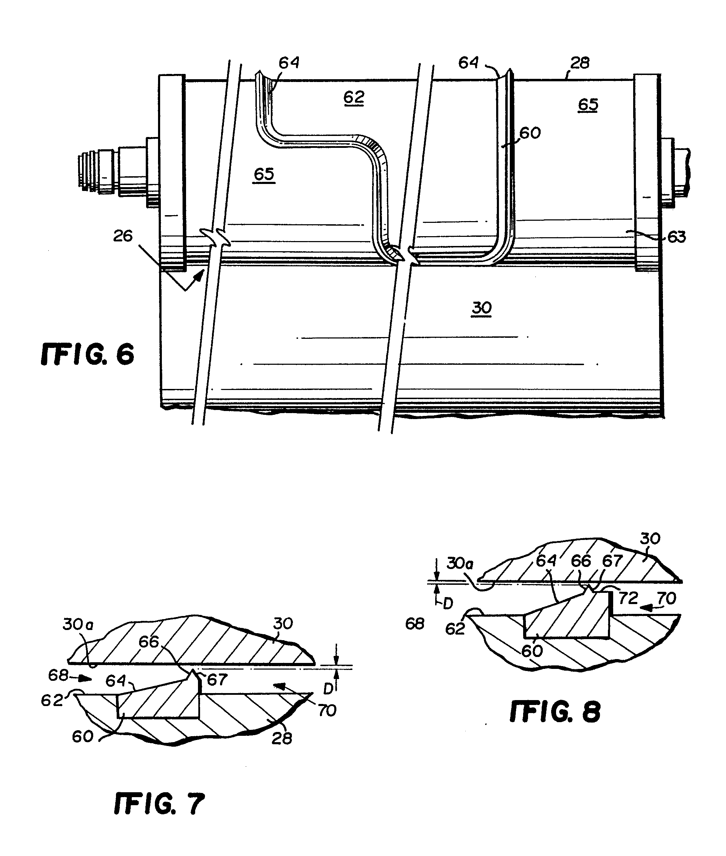

Roll 52 is rotated in synchronism, via synchronizing means 56, with the sequential passage of the mat preforms 40 so that the cutting edges on roll 52 register exactly with an outer plane passing perpendicularly through the edges 18 of mat preforms 40. The preforms 40 are thus severed from the waste regions 42 of sheet 29 along planes which are shown by chain lines 54 in FIGURE 5.

The synchronizing means 56 can be of any suitable type, for example, mechanical synchronizing systems employing a pulley and timing chain. Synchronizing means 56 may also be embodied in the form of a master/slave electronic and/or pneumatic control system which measures the rotation speed of roll 32 and/or rolls 28, 30 for example, and then synchronizes the rotation of roll 52 to this measured rotation speed.

The pattern and platen rolls 28, 30, respectively, are shown more clearly in accompanying FIGURE 6. Pattern roll 28 includes a continuous rib 60 extending about at least a portion of the pattern roll's cylindrical surface 63 so as to establish an interior recessed region 62 and a lateral (i.e., outside region 62) waste region 65. As is seen, the rib 60 establishes a contoured surface 64 (which in the illustrated example of FIGURE 6 just happens to be a beveled surface) which slopes upwardly and outwardly away from the recessed region 62. Surface 64 thus presents a negative image of the tapered edge 18 to be formed on the mats 10.

FIGURE 7 shows one possible cross-sectional profile which may be provided for rib 60. As is seen, the cross-section profile of rib 60 includes surface 64 (which is a negative image of the tapered edge 18 of mat 10) which slopes upwardly and outwardly away from the recessed region 62. Surface 64 terminates in a converging pair of edge-forming surfaces 66, 67 which project toward the external cylindrical surface 30a of platen roll 30 but establish a small gap of a dimension D therebetween. The edge forming surfaces 66, 67 thus establish the lateral-most extent of tapered edge 18.

Gap "D" in the continuous in-line extrusion process of the present invention permits the molten thermoplastic material to be compressed in the volumetric portion 68 (i.e. that discrete volumetric portion established at the nip 26 between the recessed region 62/surface 64 and the opposing surface 30a of platen roll 30) and flow through gap D to the lateral waste region 70 (i.e., that region established between surface portion 65 of pattern roll 28 and surface 30a of platen roll 30 in opposition therewith). Thus, gap "D" defines an escape route for excess molten thermoplastic extruded into nip 26 and compressed (i.e., molten) between rolls 28 and 30. This compressive force, in turn, permits the surface 64 to, in effect, mold in a continuous manner the tapered edges 18 of mat 10. However, since thermoplastic material will be present in gap D between the edge forming surfaces 66, 67 of rib 60, the mats 10 will be connected to the waste region 42 -- that is, the mat preforms 40 will be formed and connected to the waste regions 42 yet will be in a condition where they can easily be removed therefrom as has been discussed above.

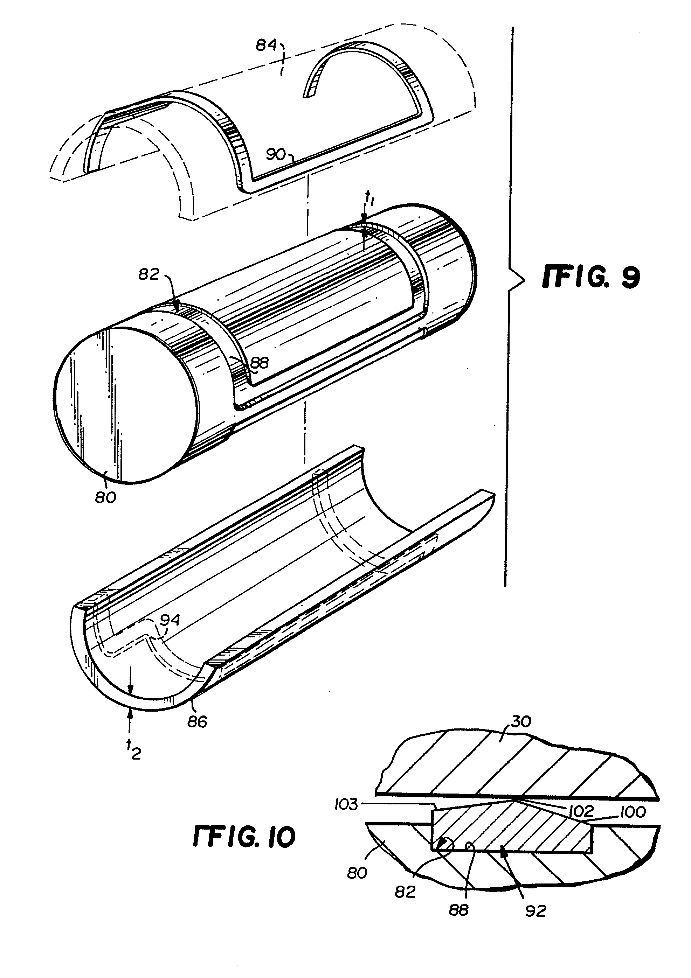

An alternate possible cross-sectional profile of rib 60 is shown in accompanying FIGURE 8. As is seen, the profile of rib 60 shown in FIGURE 8 is identical to that shown in FIGURE 7 with the exception being that an extension surface 72 projects laterally of the edge forming surfaces 66, 67 (i.e. projects into the waste region 68). The projection surface 72 thus permits suitable bolts (not shown) or like securing means to passed vertically therethrough so as to insure rigid coupling between the rib 60 and the pattern roll 28.

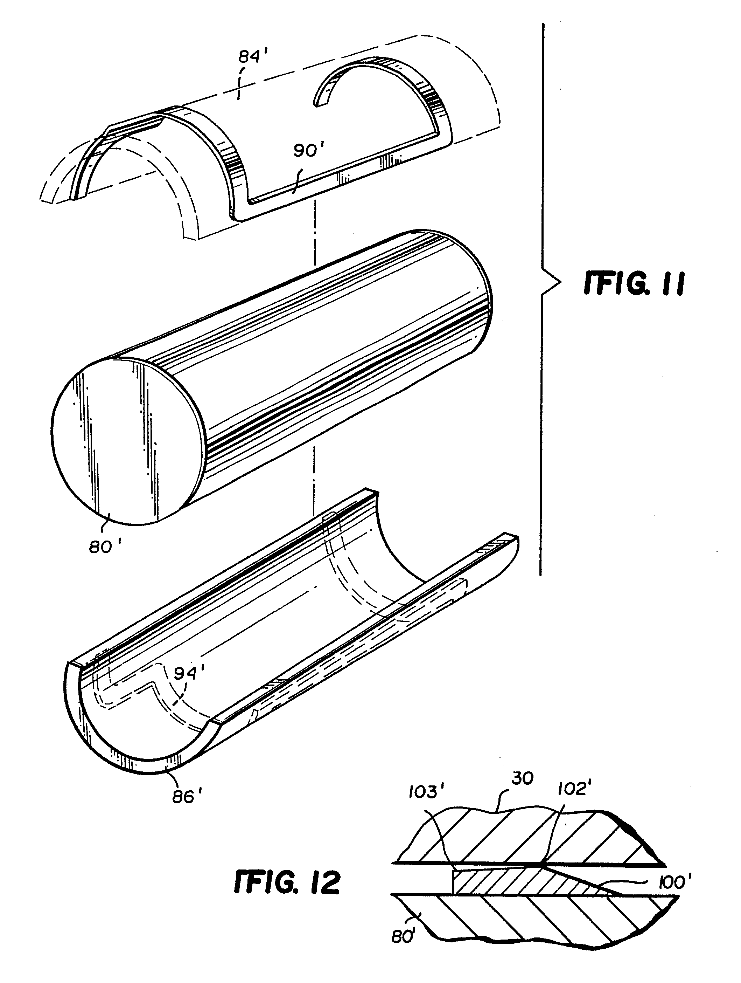

Referring now to FIGURES 9 and 10, there is illustrated in greater detail a die or pattern roll 80 which may be used in the process for manufacturing the article, i.e., the mat 10, in opposition another surface, e.g., the platen roll 30 (see FIGURE 3), which may or may not have a pattern formed on its surface. To form a pattern roll in accordance with the present invention, a groove 82 is first formed in the surface of roll 80 in the outline of at least part of the shaped article. The groove 82 has a depth $t_1$ which is less than the wall thickness of $t_2$ of, as exemplified here, a pair of cylindrical half-sleeves 84 and 86. The inside diameter of the half-sleeves 84 and 86 is substantially identical to the diameter of the base 88 of groove 82.

In accordance with the present invention, a pattern, in the illustrated example, a silhouette for forming the edge 18 of mat 10 is formed from each of the half-sleeves 84 and 86, preferably by using a four or more axis milling machine to create a contoured pattern. Thus, the portion 90 of the silhouette 92 is formed in the half-sleeve 84, while a second portion 94 of the silhouette 92 is formed in the half-sleeve 86. In the specific embodiment hereof, these silhouette portions 90 and 94 are mirror images of one another.

As best illustrated in FIGURE 9, each silhouette 90 and 94 constitutes essentially a strip formed from the material of half-sleeves 84 and 86 to a width dimension substantially equal to the width of groove 82 and a depth dimension substantially equal to the depth $t_2$ of the half-sleeve. The silhouette 92, as illustrated, conforms to the outline of the shaped article similarly as groove 82. The outer surface of silhouette 92 is provided with a tapered surface 100 (FIGURE 10), which constitutes the negative of the tapered edge 16 of the article 10 to be formed by the pattern roll having silhouette 92 thereon. The tapered surface 100 ends at a cutting edge 102 which is very close to, but does not touch, adjacent roll 30 (see FIGURE 6). The outer surface of silhouette 92 is further provided with another tapered surface 103 extending from cutting edge 102 in a divergent relationship to surface 100. It will be appreciated that the half-sleeves 84 and 86 can each extend up to about 180° in a circumferential direction. Consequently, the combined silhouette 90 and 94 formed from the half-sleeves 84 and 86 can likewise circumscribe the roll in their final form.

The silhouettes 90 and 94 may then be disposed in groove 82. As illustrated in FIGURE 10, the greater depth of the silhouettes in comparison with the depth of the groove enables each silhouette to project above the surface of the roll 80 and particularly its pattern forming surface 100. The silhouettes are suitably secured in the grooves, for example, by recessed set screws, not shown. When engaged in the grooves, it will be appreciated that the opposite ends of each of the silhouettes 90 and 94 abut and engage the opposite ends of the other silhouette. Thus, the silhouettes 90 and 94 in the groove 82 form a complete pattern when projected onto a flat surface and, in the illustrated embodiment, form the patterned outline or silhouette for the chair mat 10 illustrated in FIGURE 1. It will be appreciated, of course, that the half-sleeves and, consequently, the silhouettes 90 and 94 formed therefrom, need not comprise half-sleeves or extend 180° but may extend shorter distances in a circumferential direction, as desired.

Conversely, the silhouette 92 may first be formed from a full cylinder and later cut lengthwise to form two or more silhouettes. Importantly, the strips forming the silhouette are not bent or distorted when disposed in the groove 82. Consequently, the silhouettes may accurately be formed from a cylindrical sleeve, half-sleeves or cylindrical sleeve portions having other circumferential measurements and installed without any bending or distortion. The accuracy of the pattern is thus assured.

As noted before, the pattern also can be created by forming the pattern in a cylindrical sleeve. This sleeve can then be heated or otherwise expanded so it can be slipped onto the roll and fitted securely into the groove(s). In this regard, the sleeve can be made from any suitable material and need not be of the same material or type of material as the die roll.

Referring now to the embodiment of the present invention illustrated in FIGURES 11 and 12, wherein like reference numerals apply to like parts but are noted by a prime (') designation, there is provided a die roll 80' having a smooth cylindrical surface. The silhouettes 90' and 94' are similarly formed from sleeves 84' and 86', respectively or other wise as indicated above. In this form, however, the sleeves may be formed to a thickness corresponding to the depth of the patterned portion as it projects from the surface of the roll 80'. As illustrated, grooves are not provided in roll 80' as in the preceding embodiment of FIGURES 9 and 10. Rather, the silhouettes 90' and 94' are applied directly to the cylindrical surface and affixed thereto, for example, by screws, not shown. Consequently, the thickness of the sleeves 84' and 86' may be substantially less than the corresponding sleeves disclosed in the previous embodiment. Also, as illustrated in FIGURE 12, the tapered surfaces 100' and 103' and the remaining portion of the silhouette projecting from the surface of roll 80' are identical to the raised pattern of the silhouette as in the previous embodiment, the difference being that one silhouette is disposed in a groove while the other is mounted flush to the cylindrical surface of the roll. As shown here, the diverging tapered surfaces 100' and 103' meet at the cutting edge 102' which is very close to, but does not touch, adjacent roll 30.

It will be appreciated that by the foregoing aspect of this invention, there is provided a pattern roll which may be formed accurately to the desired pattern without materials treatment and without bending or distortion of the surfaces forming the pattern.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A method of forming a plastic product having a continuous contoured peripheral edge comprising the steps of:

establishing a recessed region on at least a portion of a pattern roll, the recessed region being bounded by a continuous rib which is contoured so as to correspond to a formed contoured peripheral edge of a plastic product;

rotating said pattern roll in opposition to another roll so that the continuous edge on the pattern roll and the other roll in opposition therewith establish, at a nip therebetween, a volumetric portion of said recessed region;

continuously extruding a molten thermoplastic material into the nip formed between said pattern roll and said another roll while simultaneously continuing to rotate said pattern roll in opposition to said another roll, said continuous simultaneous extrusion and rotation causing said molten material to fill completely said volumetric portion so that upon further extrusion and rotation, said plastic product having a contoured peripheral edge is formed; and then

allowing said thermoplastic material to solidify.

2. A method as in claim 1, wherein an excess of molten thermoplastic material is extruded into the nip formed between said pattern and another rolls, and wherein said excess is forced laterally of said rib.

3. A method of forming a thermoplastic sheet which includes a sequential plurality of mat preforms whose peripheral edges are recessed and contoured in said sheet, wherein said method comprises the steps of:

rotating a pattern roll having a continuous rib formed on at least a portion of the pattern roll's cylindrical surface in opposition to a platen roll, said rib being contoured in correspondence to said contoured peripheral edges of a mat preform and defining an interior region which corresponds to a mat preform; while simultaneously

extruding a molten thermoplastic material into a nip formed between said pattern and platen rolls at said interior region defined by said rib so as to form a sheet of said thermoplastic material having recessed and contoured edges formed therein by virtue of said rotating rib of said pattern roll; and then

allowing said sheet to cool so as to provide a sheet of thermoplastic material having a sequential number of said mat preforms defined therein.

4. A method as in claim 3, further comprising the step of severing said mat preforms from said sheet.

5. A method as in claim 4, wherein said step of severing said mat preforms includes the steps of passing said sheet into contact with a cutting roll having a cutting edge which corresponds to said recessed and contoured edge of said mat preform in the sheet, and rotating said cutting roll in synchronism with the passage of said mat preforms in contact therewith, whereby said mat preforms are severed from the sheet.

6. A method as in claim 5 wherein said cutting roll is located downstream of said pattern and platen rolls.

7. A method as in claim 4 wherein said step of severing said mat preform is accomplished by means of said pattern simultaneously with the formation of said mat preform in the sheet.

8. A pattern roll for use in forming a contoured edge on a plastic product comprising;

at least one pattern segment rigidly associated with a portion of said roll's surface,

said pattern segment being such that when projected onto a flat surface, it has an outline corresponding to an edge of a plastic product to be formed, and wherein

said pattern segment is defined in cross-sectional profile by a continuous surface corresponding to the contour of said edge on a plastic product to be formed thereby, said continuous surface terminating in a raised edge surface which establishes the lateral extent of said plastic product contoured edge.

9. A pattern roll as in claim 8 wherein said pattern segment is further defined by another surface which extends laterally from said raised edge surface.

10. A pattern roll as in claim 8, wherein:

said roll has at least one groove of predetermined depth in its surface which, when projected onto a flat surface, defines an outline of at least a part of the shaped portion of the article;

said least one pattern segment being received in said groove and having a depth exceeding the depth of the groove to project in part above the surface of the roll for forming at least part of the shaped portion of the article;

said pattern roll also having means cooperable between said roll and said pattern segment for retaining said pattern segment in said groove;

said pattern segment extending about at least a portion of the circumference of said roll;

said pattern segment being defined in cross-sectional profile by means of (i) a first tapered surface extending away from said roll surface and terminating in a cutting edge, and (ii) a second tapered surface extending from said cutting edge towards said roll surface;

said first and second surfaces thereby diverging relative to one another from said cutting edge.

11. A pattern roll as in claim 10, wherein at least two pattern segments are received in respective portions of said groove.

12. A pattern roll as in claim 11, wherein each said pattern segment is formed of a generally semi-cylindrical configuration prior to insertion into said respective portions of said groove.

13. A pattern roll as in claim 10, wherein first and second pattern segments collectively define the outline of the article, said first and second pattern segments having opposite ends lying in substantially abutting relation with one another.

14. A method of making a pattern roll which is adapted to form a shaped portion of an article by passing a preform of the article between the pattern roll and an adjacent surface, said method comprising the steps of:

forming at least one recessed groove of preselected geometric configuration in a cylindrical surface of a roll having a predetermined diameter, such that the geometric configuration of the groove, when projected onto a flat surface, has an outline of at least a part of the shaped portion of the article to be formed, said groove having a depth dimension $t_1$ to thereby establish a groove diameter $d_1$ which is less than the predetermined roll diameter;

selecting a rigid cylindrical sleeve portion having internal and external diameters which establish a thickness dimension $t_2$ of said sleeve which is greater than the depth dimension $t_1$ of said groove;

removing unwanted sections of said rigid sleeve so as to form, with remaining sections of said sleeve, a cylindrical pattern segment which corresponds to said predetermined geometric configuration of said groove and which also has said internal and external diameter and said thickness dimension $t_2$; and then

positioning and securing said pattern segment within said groove without bending or distortion thereof, whereby said pattern segment extends from said cylindrical roll surface so as to be capable of forming a shaped portion of an article.

15. A method as in claim 14, wherein multiple pattern segments are formed, each formed pattern segment having a cylindrical extent no greater than about one-half of a circumference of the roll.

16. A method as in claim 14, further comprising expanding the diameter of the pattern segment, slipping the expanded pattern segment over the roll and positioning the expanded pattern segment in registry with the groove, and then allowing the pattern segment to return to its original diameter.

17. A method for making a pattern roll which is adapted to form a shaped portion of an article by passing a preform of the article between the pattern roll and an adjacent surface, said method comprising the steps of:

selecting a rigid cylindrical sleeve portion having internal and external diameters which establish a predetermined thickness dimension of said sleeve;

removing unwanted sections of said rigid sleeve so as to form, with remaining sections of said sleeve, a cylindrical pattern segment which corresponds to a predetermined geometric configuration of said said shaped portion of an article to be formed thereby; and then

positioning and securing said pattern segment about the cylindrical surface of the roll without bending or distortion thereof, whereby said pattern segment extends from said cylindrical roll surface so as to be capable of forming the shaped portion of an article.

18. A method as in claim 14 or 17, further comprising severing the cylindrical sleeve, either before or after forming the pattern segment therefrom, so as to form a pair of matching semi-cylindrical segments thereof.

0280525

**FIG. 1**

**FIG. 2**

**FIG. 3**

SYNCHRONIZING
MEANS

**FIG. 5**

**FIG. 4**

**FIG. 6**

**FIG. 7**

**FIG. 8**

84

90

$t_1$

82

88

80

**FIG. 9**

94

86

$t_2$

**FIG. 10**

30

103

102

100

80

82

88

92

FIG. 11

84'

90'

80'

86'

94'

0280525

16 05 88

FIG. 12

103'    30    102'

100'

80'